**Europäisches Patentamt**

**European Patent Office**

**Office européen des brevets**

(11) Publication number : **0 130 014 B2**

(12) ## NEW EUROPEAN PATENT SPECIFICATION

(45) Date of publication of the new patent specification : **22.01.92 Bulletin 92/04**

(51) Int. Cl.⁵ : **C08L 95/00, C08L 23/02, C08L 23/06, C08L 23/16, C08L 101/00, C08K 3/00, C08K 5/00**

(21) Application number : **84304029.6**

(22) Date of filing : **14.06.84**

(54) **Bitumenous compositions.**

(30) Priority : **28.06.83 GB 8317541**

(43) Date of publication of application :
**02.01.85 Bulletin 85/01**

(45) Publication of the grant of the patent :
**12.08.87 Bulletin 87/33**

(45) Mention of the opposition decision :
**22.01.92 Bulletin 92/04**

(84) Designated Contracting States :
**BE DE FR GB IT SE**

(56) References cited :
**EP-A- 0 009 432**
**DE-A- 1 594 751**
**DE-A- 1 946 999**
**DE-A- 2 657 272**
**DE-A- 2 934 037**
**DE-B- 1 720 168**
**DE-B- 1 939 926**
**FR-A- 1 368 242**
**FR-A- 1 464 016**
**FR-A- 2 288 126**

(56) References cited :
**GB-A- 1 315 968**
**NL-A- 6 706 408**
**US-A- 3 594 202**
**US-A- 3 637 558**
**US-A- 3 669 918**
**US-A- 3 790 519**
**US-A- 4 110 414**
**CHEMICAL ABSTRACTS, vol. 98, 1983, page 77, no. 162279y, Columbus, Ohio, US**

(73) Proprietor : **EXXON RESEARCH AND ENGINEERING COMPANY**
**P.O.Box 390, 180 Park Avenue**
**Florham Park, New Jersey 07932 (US)**

(72) Inventor : **Jevanoff, Andre**
**8 Avenue Wolfers**
**B-1310 La Hulpe (BE)**
Inventor : **Verrier, Pierre Eugene Michel**
**Avenue du Vivier d'Oie 63**
**B-1180 Brussels (BE)**

(74) Representative : **UEXKÜLL & STOLBERG**
**Patentanwälte**
**Beselerstrasse 4**
**W-2000 Hamburg 52 (DE)**

EP 0 130 014 B2

## Description

This invention relates to bituminous compositions having improved high temperature and low temperature properties which may be used for example in roofing applications.

Bitumen is frequently used in roof coverings, often in the form of layers of fabric which are impregnated with a soft bitumen and coated with a harder bitumen which may be a blown bitumen containing mineral fillers. However, these materials suffer from the problem that they cannot withstand prolonged outdoor exposure because temperature variations can lead to cracks in the harder bitumen layers and to non-recoverable deformation due to creep or flow of the viscous materials. To overcome this several layers for example five layers of bituminous roof covering are often used, but this inevitably leads to high laying and maintenance costs.

Attempts have been made to produce bituminous felts for various applications and suggestions have been made to improve the properties of the felts by modifying the bitumen with certain polymers. As yet however it has not been possible to obtain bituminous compositions which are completely satisfactory and readily produced, and which form commercially acceptable roofing materials having the desired properties. Ideally the modifier for the bitumen should be easily incorporated therein from particulate form to yield a homogenous composition which remains homogenous on storage, and should have a viscosity which permits use in normal roofing material manufacturing equipment. Thus, it is desirable that the roofing material obtained should have substantially no creep below 100°C, preferably 110°C (Ring and Ball softening point) to meet the regulations set by some countries. Moreover it should have adequate flexibility at low temperatures, for example, down to —10°C, preferably —20°C (for 2 mm thick sheet) to meet some regulations; and as low a permanent set as possible after 25% elongation. This is related to the need for constant felt properties when installed in winter climatic conditions. These properties should preferably be retained after 6 months at 70°C or 1 month at 80°C. In addition to thermal stability it is desirable that the material should stand up well to UV radiation in accordance with the xenon test. This particular feature is however not of great importance since although it is now common in certain cases to leave the bituminous roofing materials exposed to sunlight, whereas hitherto it has been conventional to coat the materials with slate or chippings which would protect the base material from UV radiation, the base material is of course black and so UV attack is in any case only superficial.

It has been proposed to modify the properties of bitumen by blending with styrene-butadiene block copolymers. Although this generally improves the properties of the bitumen immediately after blending such as its low temperature creep resistance, flexibility and elastic recovery, it may have an adverse effect on the heat ageing and UV radiation resistance properties of roofing materials formed from the blend. Furthermore, styrene-butadiene copolymers can only be used in conjunction with certain specific bitumens, otherwise they are subject to a high mixing rejection rate, that is, separation out from the bitumen. It is also known to include atactic polypropylene to form a bitumen blend suitable for use on flat roofing applications; however the balance of properties obtained with such blends are generally not optimal.

GB—A—2092517 (INTEZET) describes bitumen containing layers suitable for adhesion to runways and bridge structures which comprise a foamed PVC layer, optionally including bitumen, having a compact PVC surface layer and an underside adhesive layer. Such adhesive layer contains bitumen, an adhesion promoter such as pine resin or polybutene, an artificial rubber exemplified as SBS or atactic polypropylene, a plasticizer for regulating softening point e.g. dioctyl phthalate, and a filler exemplified as talc or chalk. No particular relationship between the plasticizer and the filler is indicated, and no suggestion is made to use an ethylene/propylene copolymer as the rubber.

It has been proposed in US—A—3 669 918 (Dow Chemical Company) to include ethylene propylene copolymer rubbers into bitumen for roofing applications. We have found however that such rubbers may only be incorporated directly into bitumen if they have low molecular weight, since higher molecular weight polymers are impossible to disperse in the bitumen when using normal blending conditions. Moreover, incorporation of ethylene propylene rubbers alone into bitumen has been found to produce compositions having softening points below 100°C, whereas it is highly desirable for the softening point to be greater than 100°C or even 120°C.

The incorporation into bitumen of ethylene propylene rubbers of high ethylene content, which are usually not readily usable with the bitumen, has been achieved according to GB—A—1 427 307 (SIPLAST) by using a polyolefin as a solid dispersion aid. Thus, the rubber and polyolefin are blended and granulated, and this granular premixture is then mixed at 180 to 250°C with the bitumen to give the required dispersion. Similarly, GB—A—1 400 145 (Briggs Amasco Limited) discloses bituminous compositions comprising a mixture of bitumen with ethylene propylene ethylidene norbornene terpolymer and polyethylene in a minor amount compared with the rubber.

GB—A—1 519 508 (HULS) discloses the manufacture of homogenous thermoplastic compositions in ribbon or granule form, which comprise blends of defined polyolefin rubber, optionally additionally a polyolefin, and bitumen. The rubber may be an ethylene propylene rubber which is a sequence polymer, that is a copolymer

EP 0 130 014 B2

containing ethylene or an alpha-olefin in addition to a statistical distribution of the monomers in the polymer chain in the form of chain sections of varying length (sequences). This gives the polymer good raw strength (at least 20 kp/cm$^2$ or 2 MPa at 25°C) and hence permits manufacture in comminuted form which is advantageous for the blending process.

US—A—4 110 414 (Goodrich) discloses mouldable thermoplastic polymer blends of high tensile strength prepared by mixing low density polyethylenes and high molecular weight ethylene propylene copolymers under conditions of heat and shear. The EP copolymer has a methylene run index, i.e., a measure of the ratio of methylene units in runs of seven or more to the sum of the runs of three methylene units plus the runs of two methylene units, of 20 or above, but there is no suggestion here that such blends might be useful for modifying bitumen. CA 98 162279y (Podesva) discloses vulcanizable mixtures for waterproof roof sheets containing ethylene-propylene rubbers, asphalt, polyethylene or polypropylene, together with fillers naphthenic plasticisers, curatives and process acids.

However, the required proportions of the components make it clear that the sheet materials are essentially the synthetic components modified or filled with asphalt. That is, the sheet form non-asphalt components comprise 40—85% of the total composition being asphalt-modified rubbers rather than rubber-modified asphalt.

It has now surprisingly been found that bitumen may be advantageously modified, particularly but not exclusively for roofing applications, by a combination of a polyolefin component, an elastomeric component, a plasticizer and a sink, which latter two components function cooperatively to regulate the high temperature and low temperature characteristics of the final blend.

According to the present invention there is provided a bitumenous composition which comprises bitumen and, dispersed therein in an amount of from 10 to 30 wt% based on the composition as a whole, a modifier system comprising a polyolefin component containig polyethylene and optionally polypropylene, an elastomeric component comprising EPM or EPDM rubber of an average ethylene content of less than 53 wt% and of a broad compositional distribution, having individual polymeric chains with respective ethylene contents which are braodly distributed about the average ethylene content of the rubber to the extent that the rubber includes polymeric chains of ethylene content at least 5 wt.% absolute greater than said average and polymeric chains of ethylene content at least 5 wt% absolute less than said average, a plasticizer, and a plasticizer sink which functions to absorb plasticizer at high temperatures and comprises a mineral filler selected from calcium carbonate and fly ash or a polymer selected from polyvinyl chloride, cellulose, methyl cellulose, lignin, modified lignin, a styrene-butadiene-styrene blockcopolymer, polybutadiene, pectin, algin and polydimethyl siloxane.

Without wishing to be bound by a theoretical consideration, it is believed that the sink functions to absorb plasticizer at relatively high temperatures. Furthermore it is believed that in certain cases, especially where the sink is an organic polymer, said sink also functions to release plasticizer into the system at relatively low temperatures.

An important feature of the invention is the cooperative functioning of the plasticizer and the sink to provide a degree of control over both the high temperature and low temperature properties of blends containing the modifier system.

The term plasticizer as used herein is meant to include high boiling esters generally used to soften polymers such as PVC, for example diisononyl adipates (DINA), diisononyl phthalate (DINP), and diisodecyl phthalate (DIDP), or other substances such as alpha-pinene or camphor.

It has been found that incorporation of plasticizer into bitumen modifier systems comprising polyethylene (PE) optionally atactic polypropylene (APP) and ethylene-propylene elastomer (EPR) results in an improvement in properties of the final bitumenous composition which depend on the glass transition temperature of the blend composition, which need not be sharp for the plasticizer to be effective. For example low temperature flexibility is improved; blend viscosity is reduced, especially at temperatures corresponding to the processing temperatures used for the manufacture of bitumen based roofing felts (150—200°C); and adhesive properties such as tack and adhesion to various substrates such as metal, glass, plastics thermoplastic elastomers, fibres (natural and synthetic) and leather are enhanced. However good low temperature properties are only a part of the requirements for such bitumenous compositions, also termed "polymer asphalt blends" (PAB) herein. Of equal importance, especially for roofing applications, are good high temperature properties. PABs based on PE, APP and EPR and having a plasticizer component have been found to be somewhat deficient in high temperature characteristics such as creep resistance at high temperature (softening point), although such blends without the added plasticizer generally have acceptable high temperature properties.

The plasticizer changes the appearance of the EPR polymer/asphalt blend surface from a matt to a shiny one. Adhesion of such blends with added plasticizer to various substrates such as wood, metal, glass etc is also enhanced.

Surprisingly it has now been found that the adverse high temperature properties conferred on PABs containing a plasticizer can be substantially negated by the incorporation of the defined sink component which is

3

EP 0 130 014 B2

believed to function to soak up excess plasticizer at high temperature without unduly influencing the beneficial low temperature properties conferred on the PAB by the plasticizer.

By low temperatures as mentioned hereinbefore there is meant the sort of temperatures to which for example rolls of roofing felt incorporating the PAB may be subjected prior to unrolling such rolls for application to a roof surface at various locations worldwide, or to which PABs are subjected for testing their suitability for such applications. For example these low temperatures may be in the range 0 to —30°C, particularly — 15 to —25°C.

By high temperatures as mentioned hereinbefore there is meant the sort of temperatures to which roofing felts incorporating the PAB may be routinely subjected in use at various locations throughout the world, or to which PABs are subjected during testing for suitability for such applications. For example these high temperatures may be in the range 70—130°C, particularly 80—120°C and especially 100—120°C. It is emphasised here, though, that the PABs according to the invention are not limited in their use to roofing applications, but may also be used for example in pipe-wrapping applications.

Sinks which have found to be suitable in modified bitumens according to the invention include mineral fillers selected from calcium carbonate and fly ash.

It is particularly preferred to use calcium carbonate as the non-reinforcing filler sink, both from a technical and economic viewpoint. Alternatively the plasticizer sink may be a polymer selected from polyvinyl chloride, cellulose, methyl cellulose, polydimethyl siloxane, pectin, algin, lignin, polybutadiene and styrene-butadiene-styrene block copolymers (SBS). Especially useful are natural polymers derived from the wood/paper industry such as the celluloses and lignins, preferably modified (depolymerised). Indeed the use of methyl cellulose of molecular weight about 162000 and $M_w/M_n=2$—3 as sink in a PAB comprising EPR/PE/APP and DINA as plasticizer has been found to give excellent resistance to creep and excellent low temperature flexibility in the final product.

The EPM or EPDM rubber used in the system is an ethylene-propylene copolymer (EPR) of an average ethylene content of less than 53 wt% and of broad compositional distribution (BCD) with regard to its ethylene content, by which there is meant EPR having individual polymeric chains with respective ethylene contents which are broadly distributed about the average ethylene content of the copolymer. Typically EPRs with broad compositional distribution include polymeric chains of ethylene content at least 5, preferably at least 10, weight percent absolute greater than the average ethylene content of the copolymer, and polymeric chains of ethylene content at least 5, preferably at least 10, weight percent absolute less than said average ethylene content. Preferably the ethylene content of the individual polymer chains includes values of from 5 to 25, more preferably 10 to 25, wt% absolute above and 5 to 25, more preferably 10 to 25 wt% absolute below the ethylene content of all the polymer chains (depending on the average ethylene content). Thus, for a BCD-EPR of ethylene content 40%, individual chains could be extracted which have ethylene contents as low as 15 wt% to as high as 65 wt% for the broadest compositional distribution.

The term ethylene propylene copolymer (EPR) as used herein means an elastomeric polymer formed from at least two monomers, one of which must be ethylene and one propylene. Thus, it includes EPM rubbers, and also unsaturated rubbers where a minor proportion of one or more polyenes such as the endomethylenes, 5-ethylidene norbornene, 5-methylene norbornene and dicyclopentadiene, or a non conjugated aliphatic diene such as 1,4-hexadiene is included in the polymeric chains, commonly termed EPDM rubbers.

The compositional distribution of an EPR is characterised by the variation in ethylene to propylene ratio among the chains and within the chains. For example if all the chains have the same composition and the chains have that composition from end-to-end then the material is said to have a narrow compositional distribution. If chains, one versus another, vary greatly in composition then the compositional distribution is said to be broad that is the individual polymer chains do not all have the same % content of ethylene monomeric units, but together span a range of ethylene contents.

The compositional distribution of an EP copolymer may be determined for example by using extraction techniques, solvent fractionation, or gel permeation chromatography to split the copolymer into its various molecular weight fractions. The ethylene content of these fractions is then measured by a standard method such as infra-red absorption or nuclear magnetic resonance. Thus according to one fractionation technique the copolymer is dissolved in a solvent such as hexane, and aliquots of a precipitant such as an alcohol are progressively added. High molecular weight fractions are precipitated first, with lower molecular weight fractions being deposited as the alcohol concentration increases. According to another technique the solid copolymer is deposited on glass beads, and then progressively eluted therefrom by treatment with amounts of progressively more powerful solvent, for example alcohol/hexane mixtures with increasing hexane concentration, or by the same strength solvent at increasing temperatures. Here, the low molecular weight fractions are eluted first, followed by higher molecular weight fractions. It has been found that with EPRs having a low average ethylene content, e.g. approx. 40 wt%, the longer chain (higher molecular weight) fractions tend to have a higher

4

ethylene content than the shorter chain (lower molecular weight) fractions. However this is not necessarily the case with broad compositional distribution EP copolymers with higher average ethylene contents.

The compositional distribution of the copolymer may be defined, as above, in terms of the extremes of composition versus the average ethylene content; or alternatively by determining the entire range of composition among the chains.

The use of BCD-EPRs in bitumen (asphalt) modifier systems according to the invention has been found to be particularly advantageous when the copolymer has a low average ethylene content, for example less than 50% or 53% by weight, particularly from 40 to 45 wt%. In general, the lower the ethylene content of an EPR, the lower is its crystallinity. It is known that bitumen modified with EPR of high crystallinity (high ethylene content) has an improved mechanical strength, but by virtue of this high ethylene content masterbatch modifier systems containing such EP copolymers are considerably more difficult to prepare than low ethylene content EPRs, since the crystallinity has to be melted. According to the invention modifier systems including EP copolymers of low average ethylene content but broad compositional distribution not only give improved properties to the bitumenous composition, but also are more readily prepared by the techniques common in the art. It is speculated that low ethylene content, broad compositional distribution EP copolymers have, despite their low average ethylene content, an increased crystallinity because they include polymeric chain segments containing ethylene in a proportion which is at least 5 wt% absolute greater than the average. Thus, certain copolymer chain segments will effectively contain blocks of "polyethylene" which interact with each other and with the polyethylene in the modified bitumen. The lower ethylene content chain segments interact with the polypropylene and the bitumen. With normal narrow compositional distribution EP copolymers (NCD-EP) much higher ethylene contents are required to yield such interaction with polyethylene. Moreover there are fewer low ethylene chain segments in the high ethylene NCD-EP copolymers to interact with the bitumen and polypropylene.

With regard to the polyolefin component of compositions according to the invention, the polyethylene is preferably high density polyethylene (HDPE), and, when present the polypropylene should be atactic polypropylene (APP), with the ratio between these two in the polyolefin component depending to a great extent on the properties required of the bitumenous composition. For example APP tends to depress softening point but improve low temperature characteristics, whereas HDPE tends to increase the softening point for example to 120—130°C which is highly desirable for roofing applications. However HDPE may be detrimental by stiffening the blend at low temperature by virtue of its high crystallinity.

The elastomer/polyolefin couple of the modifier system may vary in dependence on the desired end properties. Preferably the couple will comprise from 40 to 80 wt% of the elastomeric component, for example from 50 to 75%, with the balance being polyolefin component. In this polyolefin component the ratio of polyethylene to polypropylene is preferably in the range 40:60 to 60:40 by weight, more preferably in the ratio 1:1. A particularly useful modifier system contains EPR:APP:HDPE in the weight ratio 50:25:25. The modifier system may also contain additives such as stabilizers and antioxidants. Reinforcing fillers such as carbon black or silica are not used since although they can improve the softening point of the bitumenous composition, their presence tends to increase brittle failure at low temperatures.

The BCD-EPRs which have been found to be particularly useful in bitumenous compositions according to the invention may be produced by conventional copolymerisation techniques adapted to yield the BCD product by control of process conditions as is well understood in the art. For example the degree of agitation in the copolymerisation reactor can be adjusted to give the desired product. Alternatively, of the numerous copolymerisation catalyst systems that are known, the various combinations of catalyst and cocatalyst can be adjusted by relatively simple testing methods to yield EPRs having the compositional distribution of any sufficient breadth for the proposed end use of the bitumenous composition.

The bitumenous compositions of the invention may be produced simply by mixing the components of the modifying system into the bitumen at elevated (melt) temperature, provided that the elastomer/ polyolefin couple is pre-mixed as a masterbatch and preferably with the sink being added last. However according to another aspect of the invention there is provided a method of producing bitumenous compositions as hereinbefore defined which comprises first forming a modifier masterbatch of the ethylene-propylene copolymer, polyethylene, optionally polypropylene, plasticizer and sink therefor, and subsequently incorporating such masterbatch into the bitumen in an amount leading to the specified final composition. Compositions produced by this method have been found to reach equilibrium properties on ring and ball softening point and low temperature flexibility much faster than blends produced by a simple sequential additive technique. Thus, the masterbatch method allows industrial producers to carry out immediate testing of the product, whereon otherwise a delay of several days is required to obtain a proper measure of the blend properties.

By way of example the masterbatch may be prepared by incorporating all the ingredients in an internal mixer e.g. Banbury type, and mixing for about 3 minutes at flux temperature e.g. about 140°C. Subsequently the mixture is pelletised using a single screw extruder, and the pellets dusted with talc to prevent agglomeration. This method is useful for laboratory scale work. For more economical bulk scale work, mixing and pelletisation may be performed for example in a high intensity dual screw continuous mixer, such as a Werner-Pfleiderer or a Farrel, with a die temperature of about 180°C.

Any form of bitumen may be used provided it is compatible with the modifier. For example the bitumen may be Safaniya 180/220, which is a non-blown (non-oxidised) straight bitumen of moderate aromaticity from Saudi Arabia.

It has been found that the modifier masterbatch may be incorporated into the bitumen using conventional blending equipment to give a homogeneous blend which is generally stable on storage and of a viscosity that may be processed under normal roofing material manufacturing conditions. Thus yet another aspect of the invention provides for the use of such bitumenous compositions as roofing materials, which are generally found to have desirable physical properties which are retained after heat ageing.

By way of example, the modifier masterbatch may be incorporated into the bitumen under laboratory conditions by heating the bitumen to 190—200°C in a rapidly (1000 rpm) stirred glass reactor and adding modifier masterbatch in pellet form over 15 minutes without vortex formation, stirring being continued for about 1 hour after the addition. Dispersion quality may be checked visually (film test, or preferably using a microscope). Alternatively paddle mixing at e.g. 60 rpm for about 4 hours may be employed. On a bulk scale an industrial paddle mixer at e.g. 20 rpm may be used, with addition of modifier over e.g. 1 hour and further mixing at a temperature of about 170—190°C for about 1 hour.

The modifier system is contained in the bitumen in a proportion of from 10 to 30% by weight based on the composition as a whole, such a proportion having been found to give optimum end product physical properties in conjunction with commercial acceptability. More preferred is the range 15 to 25 wt% and particularly the range 20 to 25 wt%. In a preferred embodiment the final PAB contains 4—8 wt% sink, 2—4 wt% plasticizer, and 12—15 wt% combined elastomer/polyolefin components, with the balance being bitumen. In the case where the modifier system is added as a masterbatch it is preferred that such masterbatch comprises 15—30 wt.% sink, 5—15 wt.% plasticizer and 55—30 wt.% combined elastomer and polyolefin. The preferred ratio of elastomer to polyolefin is as stated hereinbefore.

The following Examples illustrate the invention, Examples 1—9, 14, 20, 21 and 33-36 being by way of comparison. Results are collated in Tables 1—6.

Examples 1—10

A blend of BCD-EPR, APP and HDPE was prepared by mixing the components in a ratio by weight of 50:25:25. The EPR had an average ethylene content of 42% by weight, and a broad compositional distribution (as hereinbefore defined) by virtue of the catalyst system employed in its production. Its density was 0.86 g/cc (23°C); $M_L(1+8)$ value 33 at 100°C inherent viscosity 3.34 (in decalin at 135°C); and molecular weight characteristics (by GPC in 1,2,4 trichlorobenzene at 135°C) $M_n$=6300, $M_w$=296,000, $M_w/M_n$=47, broad MWD. The APP was AMOCO grade 115—301 A of density 0.85 g/cc at 23°C, Brookfield viscosity range 200-1200 cps (200—1200 mPa · s) at 190°C, and ash content 0.05 wt.% max.

The HDPE was HD 6950 SA (ESSO), a narrow molecular weight distribution product of density 0.963 g/cc 23°C, ASTM D 1505); and melt index 7 g/10 min (ASTM D 1238, 2.16 kg load).

Blending was by incorporating all the ingredients in a Banbury internal mixer and mixing at flux temperature (about 140°C) for 3 minutes. Thereafter the blend was pelletised in a single screw extruder and the pellets dusted with talc to prevent agglomeration.

The blend was used as a component of a bitumenous composition, alone (Examples 1—5), in combination with plasticizer (Examples 6—9), and in combination with both plasticizer and sink (Example 10). For Examples 1—5 the EPR/PE/PP blend was incorporated in appropriate amounts into a 200 penetration straight bitumen of Safaniya origin. Thus the bitumen was heated to 200—205°C in a rapidly stirred glass reactor and masterbatch pellets were added over a 15 minute period, without vortex formation (but with dimples being observed at the bitumen/air interface). After the addition mixing was continued for 1 hour.

For Examples 6—9 the same procedure was followed, but with the simultaneous incorporation of plasticizer.

For Example 10, 12 parts by weight of a BCD EPR/APP/HDPE blend containing 31.9 wt% EPR, 16.0 wt% HDPE and 16.0 wt% APP were mixed into 81.0 parts by weight bitumen over 35 minutes at 200°C. Thereafter, to a total mixing time of 1 hour, were added 7.0 parts by weight of a suspension of composition (wt.%) PVC (37.7), DINA (56.6) and Ca/Ba salt PVC stabilizers (5.7).

The compositions thus produced were tested with regard to suitability for roofing applications by the following methods.

(a) Softening point: by the "Ring and Ball" method, ASTM D-36, expressed in °C.

(b) Foldability: by a non-standard method, a strip of the bituminous composition (2×30×100 m) is conditioned at a constant temperature for 1 hour and then folded (over a period of 5 seconds) around a mandrel of 10 mm diameter (or, in certain tests, 20 mm diameter).

If the sample does not exhibit surface microcracks, the procedure is repeated at a lower temperature (reduced by 5 degrees C stepwise) until such time that microcracks do appear on folding, the temperature of first cracking being considered as the foldability value.

From Table 1 it may be seen that the use of the EPR/PE/PP blend to modify the system gives relatively poor low temperature flexibility but excellent high temperature properties; incorporation of plasticizer improves low temperature flexibility but reduces softening point; and use of plasticizer and a sink in so accordance with the invention gives improved properties at both high and low temperature conditions. Moreover these PABs are of smooth texture.

Examples 11—13

The BCD-EPR, APP and HDPE as defined in Example 1 were used to produce a PAB by the modifier masterbatch technique. Thus a modifier masterbatch containing 31.9 wt.% of the BCD-EPR, 16.0 wt.% of the HDPE, 16.0 wt.% of the APP, 25.4 wt.% precipitated calcium carbonate (Calofort U, registered trade mark) and 10.7 wt.% DINA was prepared and incorporated into the bitumen as specified for Example 1 in a proportion of 18.8% (Example 11), 23.4% (Example 12) and 28.0% (Example 13).

Ring and Ball softening point and flexibility tests as defined for Examples 1—10 were performed. In addition other standard tests were carried out as follows:

Viscosity

was measured (Pa . S) with a Brookfield (registered trade mark) coaxial cylinder viscometer at 180°C and 200°C.

Homogeneity index

This is a test of 'oil' decantation, according to which the blend is maintained without stirring in a beaker during a period of 15 hours at 150°C. An index of 10 is for a perfectly homogenous blend, whilst an index of 1 indicates total demixing.

Penetration

is measured in units of 0.1 mm and corresponds to the penetration at 25°C and 40°C of a standard needle into the sample under a given load over a period of 5 seconds.

Penetration index

PI is given by $(20—500\,a)/(1+50\,a)$ where a is the slope of a straight line plot of the decimal log. penetration versus temperature, obtained by measuring penetration at various temperatures.

Stress-strain properties

Here a 2×15×50 mm strip is elongated at a constant rate of 500 mm/min, with the distance between jaws being 20 mm. The yield values and values at break are recorded, tensile stress in MPa and elongation in %.

The results are set out in Table 2. In general low viscosity values favour easy processing, whilst a high homogeneity index is preferred (although this is less important for paving asphalts).

Of course high softening point values are preferred since these correspond to blends which show resistance to high temperature creep. Similarly, low flexibility values are preferred for roofing applications.

The softening point and flexibility tests were repeated on 2 mm thick samples which had been aged respectively for 15 days and 2 months at respective temperatures of +70°C (heat ageing) and -5°C (cold ageing) in an air circulated oven. These results are collated in Table 3.

Examples 14—21

7

The EPR/PE/PP blend used in Example 1 was incorporated alone at 15 wt.% into the previously mentioned bitumen (Example 14), and together with sink and plasticizer in the ratio 15 wt.% blend: 2.5 wt.% plasticizer: 5 wt.% sink (Examples 15—19). For Examples 15-18 the plasticizer was DINA, whilst for Example 19 it was camphor. The sinks used were Calofort U calcium carbonate (Example 15); methyl cellulose (Example 16); styrene/butadiene/styrene (SBS) block copolymer (Cariflex (registered trade mark) TR 1602 and BR 1220 for Examples 17 and 18 respectively); and polydimethylsiloxane (Example 19). Various properties of the resulting PAB were measured both initially and after 15 days ageing at 70°C. The results are listed in Table 4, which for further comparison includes data obtained on bitumen modified with 12 wt.% and 14 wt.% SBS alone (Examples 20 and 21 respectively). Further tests after 15 days ageing at -5°C showed there to be no change in Ring and Ball softening point nor flexibility for any of these compositions.

Examples 22—32

Further tests were performed on PABs produced by mixing into bitumen, modifier masterbatches comprising 66.66 wt.% of the EPR/PE/PP blend of Example 1; 11.11 wt.% of DIDP plasticizer; and 22.22 wt.% of a sink. The sinks of Examples 22—24 were Calofort U calcium carbonate; and that of Example 31 was Omya BL (registered trade mark) calcium carbonate. Examples 28—30 used methyl cellulose (MC) and Example 32 used powdered cellulose (PC). The results, collated in Table 5, show the effect of varying sink and sink proportion.

Examples 38—36

To provide a comparison with materials which hitherto have been conventionally used for modifying bitumen, softening point and flexibility tests were performed on a PAB produced by incorporating into the bitumen as described in Example 1, 10% by weight of an SBS copolymer. This copolymer had a high molecular weight of 300,000, contained 30 wt% styrene and was of the teleblock type. It was incorporated in powder form into the bitumen at about 200°C. The above mentioned tests were performed on the blend under ambient conditions and also after heat ageing at 70°C for 15 days, 1 month and 3 months. Results are collated in Table 6.

From the Examples it will be observed that the bitumenous compositions according to the invention, particularly those of Examples 11—13, generally exhibit good high temperature and low temperature properties which advantageously are maintained after ageing. In contrast, blends formed using an SBS as modifier system, although initially comparable, show deterioration with ageing.

The bitumenous compositions of the present invention may be processed into roofing materials by standard processing techniques. They may be used to impregnate felts and as intermediate layers in the traditional multilayer roofing materials; however they are primarily intended for use in the preparation of single or double layer roofing materials. In either circumstance it has been found that the use of the bitumen compositions of the present invention permits the fabrication of roofing materials of improved viscoelastic properties, softening point, low temperature flexibility and ageing characteristics. They are also seen to be useful in their adhesion to various substrates (pipewrapping) and as barrier, repair and jointing compounds in the automotive and building industries. A further aspect of the invention therefore relates to a method of protecting a roof or substrate by applying thereto a bitumenous composition according to the invention, optionally in laminate form.

## TABLE 1

| Example | 1 | 2 | 3 | 4 | 5 | 6 | 7 | 8 | 9 | 10 |
|---|---|---|---|---|---|---|---|---|---|---|
| EPR/PE/PP | 12 | 12.5 | 13 | 16 | 20 | 12 | 12 | 12 | 12 | 12 |
| DINA | — | — | — | — | — | 4 | 6 | 8 | — | 4 |
| DINP | — | — | — | — | — | — | — | — | 8 | — |
| CaCO$_3$ | — | — | — | — | — | — | — | — | — | |
| PVC | — | — | — | — | — | — | — | — | — | 3* |
| Bitumen | 88 | 87.5 | 87 | 84 | 80 | 84 | 82 | 80 | 80 | 81 |
| Softening Point | 119 | 121 | 122 | 124 | 127 | 107 | 99 | 101 | 107 | 120 |
| Flexibility | −10 | −10 | −10 | −10 | −10 | −20 | −25 | −25 | −20 | −20 |

Amounts are in % by weight of total composition
Softening point and Flexibility values are in °C
* includes 0.4% stabilizer

## TABLE 2

| Example | 11 | 12 | 13 |
|---|---|---|---|
| wt% masterbatch | 18.8 | 23.4 | 28.0 |
| wt% bitumen | 81.2 | 76.5 | 72.0 |
| softening point (°C) | 118 | 118 | 125 |
| flexibility (°C) | −15 | −20 | −25 |
| viscosity (180°C), Pa · s | 2 | 4 | — |
| viscosity (200°C), Pa · s | 1.1 | 2.3 | — |
| homogeneity index | 5 | 8 | 10 |
| penetration (25°C) | 68 | 65 | 59 |
| penetration (40°C) | 147.5 | 134 | 106 |
| penetration index | 4.15 | 4.65 | 6.35 |
| stress/strain (yield) — tensile (MPa) | 0.14 | 0.14 | 0.18 |
| — elongation (%) | 40 | 90 | 80 |
| stress/strain (break) — tensile (MPa) | 0.04 | 0.07 | 0.11 |
| — elongation (%) | 1600 | 1800 | 2100 |

## TABLE 3

| Example | 11 | | | | 12 | | | | 13 | | | |
|---|---|---|---|---|---|---|---|---|---|---|---|---|
| Ageing temperature (°C) | — | 70 | 70 | −5 | — | 70 | 70 | −5 | — | 70 | 70 | −5 |
| Ageing period (months) | 0 | 0.5 | 2 | 0.5 | 0 | 0.5 | 2 | 0.5 | 0 | 0.5 | 2 | 0.5 |
| Softening point | 118 | 108 | 120 | 120 | 118 | 124 | 124 | 118 | 125 | 113 | 124 | 120 |
| Flexibility | −15 | −15 | −10 | −20 | −20 | −20 | −20 | −20 | −25 | −15 | −20 | −25 |

## TABLE 4

| Example | 14 | 15 | 16 | 17 | 18 | 19 | 20 | 21 |
|---|---|---|---|---|---|---|---|---|
| Softening Point | 123 | 118 | 124 | 124 | 124 | 123 | 110 | 118 |
| Flexibility | −10 | −20 | −25 | −25 | −20 | −20 | −20 | −30 |
| Penetration at 25°C | 33 | 65 | 63 | 56 | 72 | 65 | 47 | — |
| Penetration Index | 4.8 | 4.65 | 4.30 | 5.13 | 4.54 | 5.41 | 4.0 | — |
| Tensile strength (yield) | .38 | .14 | .16 | .20 | .18 | .12 | .10 | .16 |
| Tensile strength (break) | .40 | .07 | .06 | .12 | .07 | .06 | .38 | 1 |
| Elongation (yield) | 140 | 90 | 70 | 80 | 60 | 80 | 40 | 100 |
| Elongation (break) | 1500 | 1800 | 1600 | 2000 | 1100 | 2000 | 3500 | 3000 |
| After Ageing Softening Point | 126 | 124 | 124 | 122.5 | 122 | 126 | 113 | 122 |
| Flexibility | −10 | −20 | −15 | −15 | −15 | −15 | −20 | −30 |

## TABLE 5

| Example | 22 | 23 | 24 | 25 | 26 | 27 | 28 | 29 | 30 | 31 | 32 |
|---|---|---|---|---|---|---|---|---|---|---|---|
| Sink | $CaCO_3$ | $CaCO_3$ | $CaCO_3$ | SBS | SBS | SBS | MC | MC | MC | $CaCO_3$ | PC |
| Modifier masterbatch (wt.%) | 17.5 | 20.0 | 22.5 | 12.5 | 15.0 | 17.5 | 15.0 | 17.5 | 20.0 | 20.0 | 20.0 |
| Softening Point | 109 | 120 | 123 | 93 | 109 | 116 | 118 | 123 | 124 | 120 | 123 |
| Flexibility (using 20 mm dia. mandrel) | −15 | −25 | −25 | −15 | −20 | −20 | −15 | −20 | −25 | −25 | −25 |

## TABLE 6

| Example | 33 | 34 | 35 | 36 |
|---|---|---|---|---|
| 70°C ageing period (months) | — | 0.5 | 1.0 | 3.0 |
| % SBS | 10 | 10 | 10 | 10 |
| % Bitumen | 90 | 90 | 90 | 90 |
| Softening point (°C) | 104 | 108 | 108 | 104 |
| Flexibility (°C) | −20 | −20 | −10 | 0 |

EP 0 130 014 B2

## Claims

1. A bitumenous composition which comprises bitumen and, dispersed therein in an amount of from 10 to 30 wt.% based on the composition as a whole, a modifier system comprising a polyolefin component containing polyethylene and optionally polypropylene, an elastomeric component comprising EPM or EPDM rubber of an average ethylene content of less than 503 wt% and a broad compositional distribution, having individual polymeric chains with respective ethylene contents which are broadly distributed about the average ethylene content of the rubber to the extent that the rubber includes polymeric chains of ethylene content at least 5 wt.% absolute greater than said average and polymeric chains of ethylene content at least 5 wt.% absolute less than said average, a plasticizer, and a plasticizer sink which functions to absorb plasticizer at high temperatures and comprises a mineral filler selected from calcium carbonate and fly ash or a polymer selected from polyvinyl chloride, cellulose, methyl cellulose, lignin, modified lignin, a styrene-butadiene-styrene blockcopolymer, polybutadiene, pectin, algin and polydimethyl siloxane.

2. A composition according to claim 1 wherein the plasticizer is diisononyl adipate (DINA), diisonoylphthalate (DINP), diisodecylphthalate (DIDP), alpha-pinene or camphor.

3. A composition according to any preceding claim wherein the polyethylene is high density polyethylene.

4. A composition according to any preceding claim wherein the polyolefin component comprises polyethylene and atactic polypropylene in a ratio of from 40:60 to 60:40 by weight.

5. A composition according to any preceding claim wherein the EPM or EPDM comprises from 40 to 80 wt.% of the combined rubber and polyolefin components.

6. A composition according to any preceding claim wherein the modifier system comprises from 15 to 30 wt.% plasticizer sink.

7. A composition according to any preceding claim wherein the modifier system comprises 55 to 80 wt.% combined polyolefin and rubber components.

8. A composition according to any preceding claim wherein the modifier system comprises from 5 to 15 wt.% plasticizer.

9. A composition according to any preceding claim which comprises from 15 to 25 wt% modifier system.

10. A method of producing a bitumenous composition according to claim 1 characterized in that the polyethylene, optional polypropylene, EPM or EPDM rubber, plasticizer and plasticizer sink are blended together to form a modifier batch, and said master batch is then dispersed in the bitumen.

11. The use of a bitumenous composition according to any one of claims 1 to 7 as a roofing material.

12. A method of protecting a roof or substrate which comprises applying thereto a bitumenous composition according to any of claims 1 to 9, optionally in laminate form.

13. A method of modifying bitumen to improve the low and high temperature properties thereof which comprises incorporating a modifier system therein in an amount such that the final composition contains from 10 to 30 wt% of the modifier system, which system comprises a polyolefin component containing polyethylene and optionally polypropylene, an elastomeric component comprising EPM or EPDM rubber of an average ethylene content of less than 53 wt% and of a broad compositional distribution, having individual polymeric chains with respective ethylene contents which are broadly distributed about the average ethylene content of the rubber to the extent that the rubber includes polymeric chains of ethylene content at least 5 wt% abosolute greater than said average and polymeric chains of ethylene content at least 5 wt% absolute less than said average, a plasticizer, and a plasticizer sink which functions to absorb plasticizer at high temperatures and comprises a mineral filler selected from calcium coarbonate and fly ash or a polymer selected from polyvinyl chloride, cellulose, methyl cellulose, lignin, modified lignin, a styrene-butadiene-styrene block copolymer, polybutadiene, pectin, algin and polydimethyl siloxane.

## Patentansprüche

1. Bituminöse Zusammensetzung, **gekennzeichnet** durch Bitumen und ein darin bezogen auf die Gesamtzusammensetzung in einer Menge von 10 bis 30 Gew.% dispergiertes Modifikationsmittelsystem, das eine Polyethylen und gegebenenfalls Polypropylen enthaltende Polyolefinkomponente, eine EPM- oder EPDM-Kautschuk mit einem durchschnittlichen Ethylengehalt von weniger als 53 Gew.% und einer breiten Zusammensetzungsverteilung, die individuelle polymere Ketten mit solchen Ethylengehalten aufweist, welche in einem solchen Ausmaß breit um den durchschnittlichen Ethylengehalt des Kautschuks verteilt sind, daß der Kautschuk polymere Ketten mit einem gegenüber dem Durchschnitt absolut mindestens 5 Gew.% höheren Ethylengehalt und polymere Ketten mit einem gegenüber dem Durchschnitt absolut mindestens 5 Gew.% niedrigeren Ethylengehalt enthält, enthaltende elastomere Komponente, einen Weichmacher und ein Weichma-

11

cheraufnahmemittel umfaßt, das zur Absorption des Weichmachers bei hohen Temperaturen dient und einen Mineralfüllstoff ausgewählt aus Calciumcarbonat und Flugasche oder ein Polymer ausgewählt aus Polyvinylchlorid, Cellulose, Methylcellulose, Lignin, modifiziertem Lignin, Styrol-Butadien-Styrol-Blockcopolymer,Polybutadien,Pektin, Algin und Polydimethylsiloxan umfaßt.

2. Zusammensetzung nach Anspruch 1, bei der der Weichmacher Diisononyladipat (DINA), Diisononylphthalat (DINP), Diisodecylphthalat (DIDP), alpha-Pinen oder Campher ist.

3. Zusammensetzung nach einem der vorangehenden Ansprüche, bei der das Polyethylen Polyethylen hoher Dichte ist.

4. Zusammensetzung nach einem der vorangehenden Ansprüche, bei der die Polyolefinkomponente Polyethylen und ataktisches Polypropylen in einem Gewichtsverhältnis von 40:60 bis 60:40 enthält.

5. Zusammensetzung nach einem der vorangehenden Ansprüche, bei der EPM oder EPDM, bezogen auf die Summe von Kautschuk- und Polyolefinkomponenten, 40 bis 80 Gew.% ausmacht.

6. Zusammensetzung nach einem der vorangehenden Ansprüche, bei der das Modifiziermittelsystem 15 bis 30 Gew.% Weichmacheraufnahmemittel umfaßt.

7. Zusammensetzung nach einem der vorangehenden Ansprüche, bei der das Modifiziermittelsystem Polyolefinkomponente und Kautschukkomponente zusammen in einer Menge von 55 bis 80 Gew.% enthält.

8. Zusammensetzung nach einem der vorangehenden Ansprüche, bei der das Modifiziermittelsystem 5 bis 15 Gew.% Weichmacher enthält.

9. Zusammensetzung nach eine der vorangehenden Ansprüche, die 15 bis 25 Gew.% Modifiziermittelsystem enthält.

10. Verfahren zur Herstellung einer bituminösen Zusammensetzung gemäß Anspruch 1, **dadurch gekennzeichnet**, daß das Polyethylen, gegebenenfalls Polypropylen, EPM- oder EPDM-Kautschuk, Weichmacher und Weichmacheraufnahmemittel unter Bildung einer Vormischung zusammengemischt werden und die Vormischung dann in dem Bitumen dispergiert wird.

11. Verwendung einer bituminösen Zusammensetzung gemäß einem der Ansprüche 1 bis 7 als Bedeckungsmaterial.

12. Verfahren zum Schützen eines Daches oder Substrats, bei dem darauf eine bituminöse Zusammensetzung gemäß eine der Ansprüche 1 bis 9, gegebenenfalls in Laminatform aufgebracht wird.

13. Verfahren zum Modifizieren von Bitumen, um dessen Eigenschaften bei niedrigen und hohen Temperaturen zu verbessern, bei dem dem Bitumen ein Modifiziermittelsystem in einer solchen Menge einverleibt wird, daß die fertige Zusammensetzung 10 bis 30 Gew.% Modifiziermittelsystem enthält, wobei das Modifiziermittelsystem eine Polyethylen und gegebenenfalls Polypropylen enthaltende Polyolefinkomponente, eine EPM- oder EPDM-Kautschuk mit einem durchschnittlichen Ethylengehalt von weniger als 53 Gew.% und einer breiten Zusammensetzungsverteilung, die individuelle polymere Ketten mit solchen Ethylengehalten aufweist, welche in einem solchen Ausmaß breit um den durchschnittlichen Ethylengehalt des Kautschuks verteilt sind, daß der Kautschuk polymere Ketten mit einem gegenüber dem Durchschnitt absolut mindestens 5 Gew.% höheren Ethylengehalt und polymere Ketten mit einem gegenüber dem Durchschnitt absolut mindestens 5 Gew.% niedrigeren Ethylengehalt enthält, enthaltende elastomere Komponente, einen Weichmacher und ein Weichmacheraufnahmemittel umfaßt, das zur Absorption des Weichmachers bei hohen Temperaturen dient und einen Mineralfüllstoff ausgewählt aus Calciumcarbonat und Flugasche oder ein Polymer ausgewählt aus Polyvinylchlorid, Cellulose, Methylcellulose, Lignin, modifiziertem Lignin,Styrol-Butadien-Styrol-Blockcopolymer, Polybutadien, Pektin, Algin und Polydimethylsiloxan umfaßt.

**Revendications**

1. Composition bitumineuse qui comprend du bitume et, dispersé dans ce bitume en une quantitié de 10 à 30% en poids sur la base de la composition totale, un système modificateur comprenant un constituant polyoléfinique contenant du polyéthylène et, facultativement, du polypropylène, un constituant élastomère comprenant un caoutchouc EPM ou EPDM ayant une teneur moyenne en éthylène inférieure à 53% en poids et une distribution large de composition, comprenant des chaînes polymériques distinctes ayant des teneurs respectives en éthylène qui sont largement distribuées autour de la teneur moyenne en éthylène du caoutchouc à un degré tel que le caoutchouc comprend des chaînes polymériques ayant une teneur en éthylène supérieure d'au moins 5% en poids, en valeur absolue, à ladite moyenne, et des chaînes polymériques ayant une teneur en éthylène inférieure d'au moins 5% en poids, en valeur absolue, à ladite moyenne, un plastifiant et un agent d'absorption de plastifiant qui sert à absorber le plastifiant aux températures élevées et comprend une charge minérale choisie entre le carbonate de calcium et la cendre volante ou un polymère choisi entre le chlorure de polyvinyle, la cellulose, la méthylcellulose, la lignine, une lignine modifiée, un copolymère séquencé styrène-butadiène-styrène, le polybutadiène, la pectine, l'algine et le polydiméthylsiloxane.

2. Composition suivant la revendication 1, dans laquelle le plastifiant est l'adipate de di-isononyle (DINA), le phtalate de di-isononyle (DINP), le phtalate de di-isodécyle (DIDP), l'alpha-pinène ou le camphre.

3. Composition suivant l'une quelconque des revendications précédentes, dans laquelle le polyéthylène est un polyéthylène haute densité.

4. Composition suivant l'une quelconque des revendications précédentes, dans laquelle le constituant polyoléfinique comprend du polyéthylène et du polypropylène atactique en un rapport de 40:60 à 60:40 en poids.

5. Composition suivant l'une quelconque des revendications précédentes, dans laquelle le caoutchouc EPM ou EPDM représente 40 à 80% en poids de la somme des poids du caoutchouc et du constituant polyoléfinique.

6. Composition suivant l'une quelconque des revendications précédentes, dans laquelle le systène modificateur comprend 15 à 30% en poids d'agent d'absorption de plastifiant.

7. Composition suivant l'une quelconque des revendications précédentes, dans laquelle le système modificateur comprend 55 à 80% en poids de constituant polyoléfinique et de caoutchouc associés.

8. Composition suivant l'une quelconque des revendications précédentes, dans laquelle le système modificateur comprend 5 à 15% en poids de plastifiant.

9. Composition suivant l'une quelconque des revendications précédentes, qui comprend 15 à 25% en poids de système modificateur.

10. Procédé de production d'une composition bitumineuse suivant la revendication 1, caractérisé en ce que le polyéthylène, le polypropylène facultatif, le caoutchouc EPM ou EPDM, le plastifiant et l'agent d'absorption de plastifiant sont mélangés tous ensemble pour former un mélange-maître modificateur, et ledit mélange-maître est ensuite dispersé dans le bitume.

11. Utilisation d'une composition bitumineuse suivant l'une quelconque des revendications 1 à 7 comme matière de couverture pour toitures.

12. Procédé de protection d'un toit ou d'un substrat, qui consiste à y appliquer une composition bitumineuse suivant l'une quelconque des revendications 1 à 9, facultativement sous forme d'un stratifié.

13. Procédé de modification d'un bitume pour en améliorer les propriétés à base et haute températures, qui consiste à y incorporer un système modificateur en une quantité telle que la composition finale contienne 10 à 30% en poids du système modificateur, système qui comprend un constituant polyoléfinique contenant du polyéthylène et, facultativement, du polypropylène, un constituant élastomère comprenant un caoutchouc EPM ou EPDM ayant une teneur moyenne en éthylène inférieure à 53% en poids et une distribution large de composition, comprenant des chaînes polymériques distinctes ayant des teneurs respecties en éthyléne qui sont largement distribuées autour de la teneur moyenne en éthylène du caoutchouc à un degré tel que le caoutchouc comprend des chaînes polymériques ayant une teneur en éthylène supérieure d'au moins 5% en poids, en valeur absolue, à ladite moyenne et des chaînes polymériques ayant une teneur en éthylène inférieure d'au moins 5% en poids, en valeur absolue, à ladite moyenne, un plasitifiant et un agent d'absorption de plastifiant qui sert à absorber le plastifiant aux hautes températures et comprend une charge minérale choisie entre le carbonate de calcium et la cendre volante ou un polymère choisi entre le chlorure de polyvinyle, la cellulose, la méthylcellulose, la lignine, la lignine modifiée, un copolymère séquencé styrène-butadiene-styrène, le polybutadiène, la pectine, l'algine et le polydiméthylsiloxane.